Europäisches Patentamt

European Patent Office

Office européen des brevets

(19)

(11) Numéro de publication: **0 250 960 B1**

# (12) FASCICULE DE BREVET EUROPEEN

(45) Date de publication de fascicule du brevet:
**21.08.91**

(51) Int. Cl.⁵: **F02B 75/02**, F02G 3/02, F02B 19/02

(21) Numéro de dépôt: **87108372.1**

(22) Date de dépôt: **10.06.87**

(54) **Moteur à combustion interne.**

(30) Priorité: **25.06.86 CH 2560/86**

(43) Date de publication de la demande:
**07.01.88 Bulletin 88/01**

(45) Mention de la délivrance du brevet:
**21.08.91 Bulletin 91/34**

(84) Etats contractants désignés:
**CH DE FR GB IT LI SE**

(56) Documents cités:
**DE-A- 2 363 637**
**FR-A- 2 136 061**
**GB-A- 1 407 224**
**US-A- 4 513 568**

(73) Titulaire: **BAJULAZ, Roger**
**22, Chemin William Barbey**
**CH-1292 Chambésy(CH)**

(72) Inventeur: **BAJULAZ, Roger**
**22, Chemin William Barbey**
**CH-1292 Chambésy(CH)**

(74) Mandataire: **Micheli, Michel-Pierre et al**
**MICHELI & CIE, Rue de Genève 122, Case**
**Postale 61**
**CH-1226 Genève-Thonex(CH)**

## Description

La présente invention se rapporte aux moteurs à combustion interne dont le cycle de fonctionnement comporte six temps ou plus tels que décrits par exemple dans le brevet US 4.513.568 et la demande de brevet européen publié No 0.104.541 ou dans la publication de la "Society of Automotive Engineers, Inc" intitulée "The Bajulaz Cycle : A Two-Chamber Internal Combustion Engin with Increased Thermal Efficiency" dans la série SAE Technical Paper Series No. 860534 de février 1986.

Du point de vue pratique ces moteurs présentent principalement l'inconvénient de nécessiter la réalisation d'étanchéité entre des pièces rotatives ou oscillantes angulairement du système de distribution du cycle à six temps ce qui dans certains cas peut présenter des problèmes de friction, de graissage et des difficultés de réalisation pratique.

La présente invention a pour objet un moteur à combustion interne du type précité tendant à obvier aux inconvénients énumérés ci-dessus, par l'absence de mouvements rotatifs ou angulaires entre des pièces devant former un assemblage étanche.

Ce moteur à combustion interne se distingue par les caractéristiques énumérées à la revendication 1.

Le dessin annexé illustre schématiquement et à titre d'exemple différentes formes d'exécution du moteur à combustion interne selon l'invention.

La figure 1 est une coupe transversale du moteur passant par l'axe d'un cylindre.

La figure 2 est une coupe suivant la ligne II-II de la figure 1.

Les figures 3 à 8 sont des coupes transversales du moteur, semblables à la figure 1 mais à plus petite échelle, illustrant chacun des six temps de son cycle de fonctionnement.

Les figures 9 à 11 sont des coupes partielles d'une seconde forme d'exécution du moteur correspondant respectivement à l'admission, l'expansion d'air chaud et à l'échappement respectivement.

La figure 12 est une vue partielle de dessus d'une troisième forme d'exécution du moteur.

La figure 13 est une vue en coupe partielle de la forme d'exécution illustrée à la figure 12.

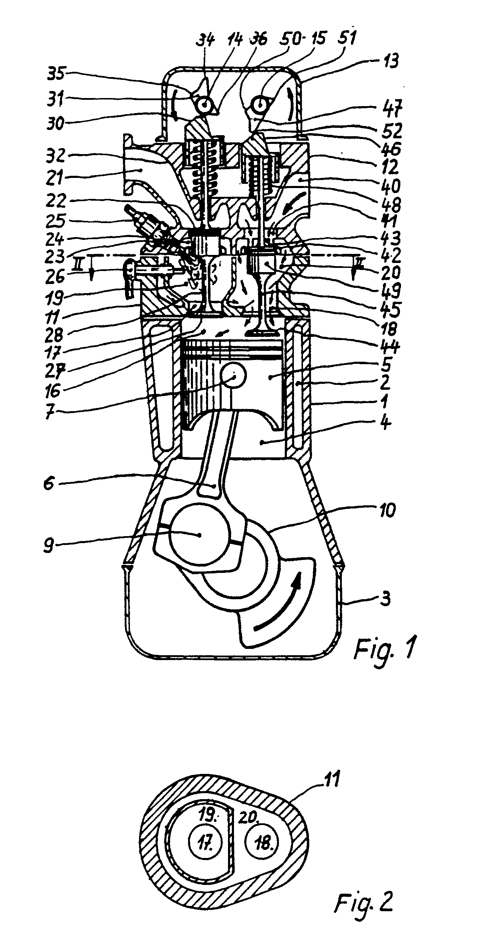

Le moteur à combustion interne illustré aux figures 1 à 8 comporte un bloc moteur 1, muni d'un circuit de refroidissement 2 conventionnel, dont l'extrémité inférieure est obturée par un carter 3. Le bloc moteur 1 comporte au moins un alésage constituent un cylindre 4 dans lequel se déplace de façon connue, un piston 5 articulé sur une bielle 6 par un axe 7. Ce piston 5 est muni de segments d'étanchéité 8 conventionnels. Contrairement aux moteurs conventionnels dont la chambre de combustion est constituée par une partie de la chambre à volume variable, dans le cas présent le volume de cette chambre à volume variable 16 est sensiblement égal à zéro lorsque le piston 5 est en position haute.

L'extrémité inférieure de la bielle 6 est tourillonnée sur un maneton 9 d'un vilebrequin 10 pivoté dans des paliers du bloc moteur 1, ceci de façon conventionnelle.

Une culasse comportant un corps inférieur 11 et un corps supérieur 12 est fixée sur la partie supérieure du bloc moteur 1 de façon connue. Enfin, la partie supérieure de la culasse est obturée par un couvercle d'arbre à came 13.

Une liaison cinématique, non illustrée, relie le vilebrequin 10 aux arbres à came 14,15 afin d'entraîner ces derniers à une vitesse angulaire trois fois inférieure à celle du vilebrequin 10.

Le cylindre 4, le piston 5 et la face inférieure du corps inférieur 11 de la culasse définissent une chambre à volume variable 16 dont la surface supérieure, formée par la face inférieure du corps inférieur 11 de la culasse, comporte deux orifices 17,18 munis de sièges de soupape.

L'orifice 17 met en communication la chambre à volume variable 16 avec une chambre de combustion 19, pratiquée dans la culasse et délimitée par un cloison en un matériau permettant un transfert rapide de la chaleur.

L'orifice 18 met en communication la chambre à volume variable 16 avec une chambre de préchauffage 20 pratiquée dans la culasse et entourant pratiquement totalement la chambre de combustion 19. Les parois de cette chambre de préchauffage peuvent être réalisées en un matériau isolant par exemple en céramique.

Le corps supérieur 12 de la culasse comporte un conduit d'échappement 21 communiquant avec la chambre de combustion 19 par un orifice 22 débouchant dans une jupe 23 coaxiale à l'overture 17 reliant la chambre de combustion 19 à la chambre à volume variable 16. Cette jupe 23 comporte une ou plusieurs lumières 24 pratiquées dans sa paroi circonférentielle et communiquant avec la chambre de combustion 19.

Un injecteur 25 permet d'injecter un combustible dans la chambre de combustion 19 au moment voulu en fonction du cycle de fonctionnement. Un organe de chauffage ou d'allumage 26, telle une bougie par exemple, débouche également dans cette chambre de combustion 19 pour provoquer la combustion ou l'explosion du mélange combustible ou détonnant comprimé dans cette chambre de combustion 19.

Une soupape 27, coaxiale à l'ouverture 17 coopère avec le siège de cette ouverture pour séparer la chambre à volume variable 16 de la chambre de combustion 19, dont la tige 28 s'étend au travers de la chambre de combustion 19, de la jupe 23 et est guidée dans le corps supérieur 12 de la culasse. L'extrémité supérieure de la tige 28 est solidaire d'un poussoir 30 qui coopère avec une came 31 solidaire de l'arbre à came 14. Un ressort 32 prenant appui sur le corps supérieur 12 de la culasse et le poussoir 30 tend à maintenir la soupape 27 contre son siège en position de fermeture.

Un piston 33 solidaire de la tige de soupape 28 coulisse de façon étanche dans la jupe 23 et l'ouverture 22 et constitue la partie mobile d'un dispositif d'obturation dont la jupe 23 constitue la partie fixe. Par un déplacement linéaire le piston 33 obture respectivement ouvre les lumières 24 de manière à fermer respectivement ouvrir la communication entre la chambre de combustion 19 et la tubulure d'échappement 21.

La came 31 comporte plusieurs levées, l'une de grande hauteur 34 et deux 35,36 de plus faible hauteur.

Lorsque les levées de faible hauteur 35,36 coopèrent avec le poussoir 30 le déplacement axial imposé à la tige de soupape 28 contre l'action de son ressort de rappel 32 est suffisant pour que la soupape 27 ouvre l'ouverture 17 provoquant la mise en liaison de la chambre à volume variable 16 avec la chambre de combustion 19; ce mouvement axial est toutefois insuffisant pour que le piston 33, organe mobile du dispositif d'obturation, découvre les lumières 24 de sorte que la communication entre la chambre de combustion 19 et la tubulure d'échappement 21 est toujours interrompue.

Ce n'est que lorsque la levée 34 de forte hauteur coopère avec le poussoir 30 que l'orifice 17 est ouvert simultanément au dispositif d'obturation, les lumières 24 étant libérées par le piston 33, et que la chambre à volume variable 16 est ainsi reliée à la tubulure d'échappement 21 par l'intermédiaire de la chambre de combustion 19.

De plus, le corps supérieur 12 de la culasse comporte également un conduit d'admission 40 communiquant avec la chambre de préchauffage 20 par un orifice 41 débouchant dans une jupe 42, coaxiale à l'ouverture 18 reliant la chambre de préchauffage 20 à la chambre à volume variable 16, et constituant l'organe fixe d'un dispositif d'obturation. Cette jupe 42 comporte une ou plusieurs lumières 43 communiquant avec la chambre de préchauffage 20.

Une soupape 44, coaxiale à l'ouverture 18 coopère avec un siège de cette ouverture pour séparer la chambre à volume variable 16 de la chambre de préchauffage 20, soupape dont la tige 45 s'étend au travers de la chambre de préchauffage 20, de la jupe 42 et est guidée dans le corps supérieur 12 de la culasse. L'extrémité supérieure de la tige 45 est solidaire d'un poussoir 46 qui coopère avec une came 47 solidaire de l'arbre à came 15. Un ressort 48 prend appui sur le corps supérieur 12 de la culasse et le poussoir 46 pour maintenir la soupape 44 contre son siège en position de fermeture.

Un piston 49 coulisse de façon étanche dans la jupe 42 et l'ouverture 41 et constitue la partie mobile d'un dispositif d'obturation dont la jupe 42 constitue la partie fixe. Par un déplacement linéaire le piston 49 obture respectivement ouvre les lumières 43 de mainère à fermer respectivement ouvrir la communication entre la chambre de préchauffage 20 et la tubulure d'admission 40.

La came 47 comporte deux petites levées 50,51 et une grande levée 52.

Lorsque les levées de faible hauteur 50,51 coopèrent avec le poussoir 46 le déplacement axial de la tige de soupape 45 contre l'action de son ressort de rappel 48 est suffisant pour que la soupape 44 ouvre l'ouverture 18 provoquant la mise en liaison de la chambre à volume variable 16 avec la chambre de préchauffage 20; ce mouvement axial est toutefois insuffisant pour que le piston 49 découvre les lumières 43 de sorte que la liaison entre la chambre de préchauffage 20 et la tubulure d'admission est toujours interrompue.

Ce n'est que lorsque la levée 52 de plus forte hauteur coopère avec le poussoir 46 que l'orifice 18 est ouvert simultanément au dispositif d'obturation, les lumières 43 étant libérées par le piston 49 que la chambre à volume variable 16 est ainsi reliée à la tubulure d'admission 40 par l'intermédiaire de la chambre de préchauffage 20.

Dans une telle construction compacte et originale, les chambres de combustion 19 et de préchauffage 20 sont situées immédiatement au-dessus de la chambre à volume variable 16 et celle-ci ne peut être reliée aux tubulures d'échappement 21 respectivement d'admission 40 qu'au travers des chambres de combustion 19 respectivement de préchauffage 20. Ceci assure, lors du fonctionnement un balayage complet des chambres de combustion 19 et de préchauffage 20 permettant une évacuation complète des gaz qui s'y trouvent et donne un meilleur rendement du moteur.

Il faut noter que les surfaces arrière, tournée vers la chambre de combustion 19 et de préchauffage 20, des soupapes 27,44 sont pratiquement égales aux surfaces inférieures des pistons correspondants 33,49 de sorte que quelle que soit la pression régnant dans la chambre de combustion 19 respectivement de préchauffage 20 aucune force, due à ces pressions, n'est communiquée aux soupapes. Ainsi, les effets exercés sur les poussoirs 30,46 et les cames 31,47, de même que la force des ressorts de rappel 28,48 sont indépendants des pressions pouvant régner dans ces chambres 19,20. Il en est de même des efforts transmis aux arbres à came 14,15.

Tout ou partie des soupapes 27,44, de leurs tiges 28,45 et des pistons 33,49 de même que des jupes 23,42 ou la culasse elle-même peuvent être réalisés en céramique.

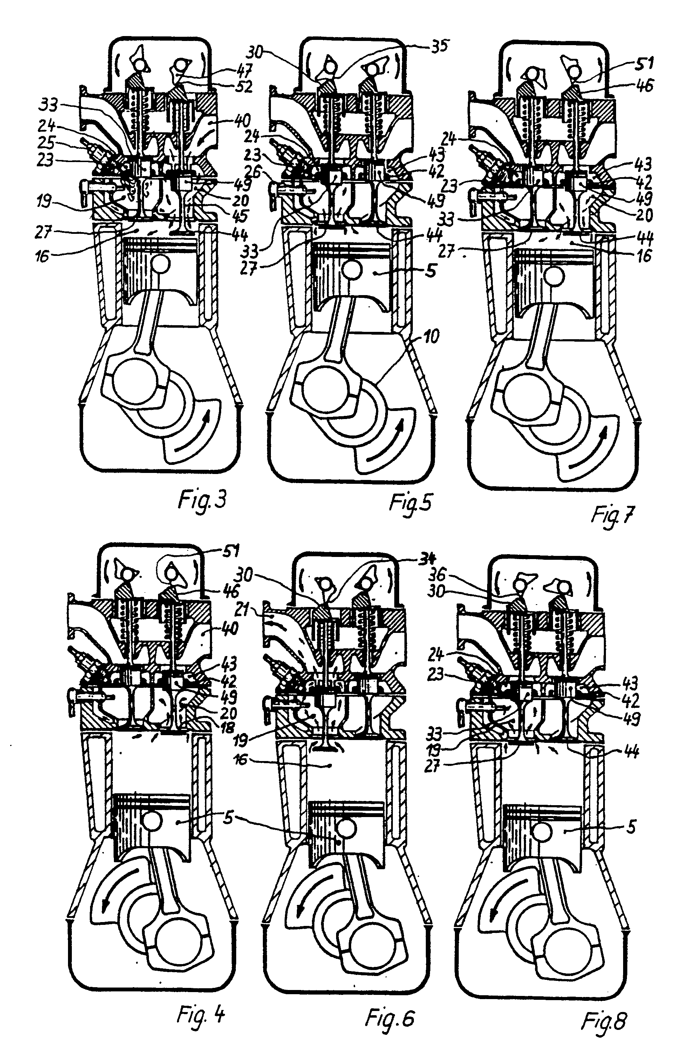

Les figures 3 à 8 illustrent schématiquement les six temps du cycle de fonctionnement du moteur décrit.

La figure 3 représente l'admission d'air dans la chambre à volume variable 16. La grande levée 52 de la came 47 déplace à fond la soupape 44 et sa tige 45, donc le piston 49 également, et la chambre à volume variable 16, dont le volume augmente, est en liaison, par l'intermédiaire de la chambre de préchauffage 20 avec la tubulure d'admission 40. Pendant ce temps, la soupape 27 est sur son siège et le dispositif d'obturation 23,24,33 est fermé; la chambre de combustion 19 remplie d'air comprimé préchauffé (figure 8) est isolée et un carburant y est injecté par l'injecteur 25, et le mélange est enflammé.

Le piston 5 arrive en fin de course basse (figure 4) le poussoir 46 coopère avec la levée 51 de faible hauteur de sorte que l'ouverture 18 est encore ouverte mais que le dispositif d'obturation 42,43,49 est fermé. Pendant la course ascendante du piston 5 l'air est refoulé et comprimé dans la chambre de préchauffage 20 qui est maintenant séparée de la tubulure d'admission 40.

Le piston 5 arrive en fin de course haute (figure 5) la soupape 44 et le dispositif d'obturation 42,43,49 sont fermés tandis que le poussoir 30 est déplacé par la petite levée 35 provoquant l'ouverture de la soupape 27, le dispositif d'obturation 23,24,33 restant fermé. Les gaz de combustion s'échappant de la chambre de combustion refoulent le piston 5 vers le bas. C'est le premier temps actif transmettant de la puissance au vilebrequin 10.

Le piston 5 arrive à nouveau en position basse (figure 6) le poussoir 30 coopère avec la grande levée 34 et la chambre à volume variable 16 est reliée à la tubulure d'échappement 21 par l'intermédiaire de la chambre de combustion 19. Pendant la course ascendante du piston 5 les gaz de combustion sont évacués.

Le piston 5 arrive à nouveau en position haute (figure 7), la soupape 27 et le dispositif d'obturation 23,24,33 sont fermés tandis que le poussoir 46 coopère avec la levée de faible hauteur 51 provoquant l'ouverture de la soupape 44 mais le maintien en position fermée du dispositif d'obturation 42,43,49. L'air contenu dans la chambre de préchauffage 20 qui a été chauffé par échange thermique au travers de la paroi le séparant de la chambre de combustion 19 et dont la pression a ainsi augmenté s'échappe dans la chambre à volume variable 16 provoquant la descente du piston 5. C'est le second temps actif, producteur de puissance, du cycle.

Le piston 5 arrive à nouveau en position basse (figure 8), la soupape 44 et le dispositif d'obturation 42,43,49 sont fermés, le poussoir 30 coopère avec la petite levée 36 de sorte que la soupape 27 est ouverte mais que le dispositif d'obturation 23,24,33 reste fermé. Ainsi pendant la course ascendante du piston 5 l'air préchauffé est comprimé dans la chambre de combustion 19. Lorsque le piston 5 arrive de nouveau en position haute on se retrouve dans la configuration illustrée à la figure 3.

Il faut noter que durant ce cycle de fonctionnement le flux d'air ou de mélange traverse deux fois l'ouverture 18 de la chambre de préchauffage 20 vers la chambre à volume variable 16 et une fois de cette chambre à volume variable 16 vers la chambre de préchauffage 20.

De même le flux d'air ou de mélange traverse deux fois l'ouverture 17 de la chambre à volume variable 16 vers la chambre de combustion 19 et une fois en sens inverse de la chambre de combustion 19 vers la chambre à volume variable 16.

Le fait d'avoir un flux alterné balayant une même soupape ne se retrouve dans aucun moteur antérieur.

Dans une variante on pourrait n'avoir qu'un seul arbre à came commandant les poussoirs 30 et 46 par l'intermédiaire de culbuteurs.

Dans une autre forme d'exécution le moteur pourrait comporter deux chambres de combustion comprenant chacune une soupape et un dispositif d'obturation comme décrit précédemment. Dans ce cas, le cycle de fonctionnement comprend huit temps, les arbres à came tournent quatre fois plus lentement que le vilebrequin 10. Dans un tel cycle à huit temps, après l'échappement des gaz de combustion (figure 6) on intercale un nouveau temps d'expansion (figure 5) du gaz de combustion contenu dans la seconde chambre de combustion suivi d'un deuxième temps d'échappement (figure 6) avant de passer au temps suivant (figure 7), qui est l'expansion de la chambre à volume variable 16 sous l'action de l'air chauffé dans la chambre de préchauffage 20.

Ce nouveau développement et cette nouvelle conception du moteur à six temps au moins, décrit dans le brevet US 4.513.568 et la demande de brevet européen publiée No 0 104 541, sont particulièrement intéressants car tout en permettant l'augmentation du rendement du moteur sa réalisation peut se faire à l'aide des techniques et matériaux bien connus et éprouvés.

En effet, les mouvements relatifs entre les pistons 5 et leurs cylindres 4 sont des mouvements linéaires de va-et-vient et l'étanchéité entre ces pièces est obtenue de façon courante à l'aide de segments racleurs et de segments d'étanchéité, technique extrêmement bien maîtrisée puisqu'elle est utilisée dans tous les moteurs à combustion interne actuels.

De même l'admission dans, et l'échappement hors de la chambre à volume variable 16 s'effectue à l'aide de soupapes commandées par un ou plusieurs arbres à came comme cela se fait traditionnellement dans les moteurs existants.

Enfin, les dispositifs d'obturation, assurant l'ouverture et la fermeture des liaisons entre la chambre de combustion 19 et la tubulure d'échappement 21 respectivement entre la chambre de préchauffage 20 et la tubulure d'admission 40 sont également constitués par des pistons coulissant linéairement dans des mouvements de va-et-vient, synchrones à ceux des soupapes dont ils sont solidaires, dans des jupes ou chemises.

Là également, l'étanchéité entre ces éléments, est réalisée à l'aide de segments et cette technique largement utilisée à l'heure actuelle est totalement dominée. Les problèmes découlant des hautes températures des gaz sont solutionnés par l'utilisation de pièces en céramique.

Le fait d'utiliser des cames à plusieurs levées, décalées les unes des autres de 60° à 120° environ, présentant deux hauteurs différentes n'entraînent pas non plus de problèmes particuliers de réalisation.

Les problèmes techniques, et notamment le fait que la température du corps inférieur 11 de la culasse, contenant les chambres de combustion 19 et de préchauffage 20, peut atteindre des valeurs élevées, sont également maîtrisés par l'utilisation de pièces en céramique qui ne nécessitent pas de lubrification et assurent une bonne isolation thermique.

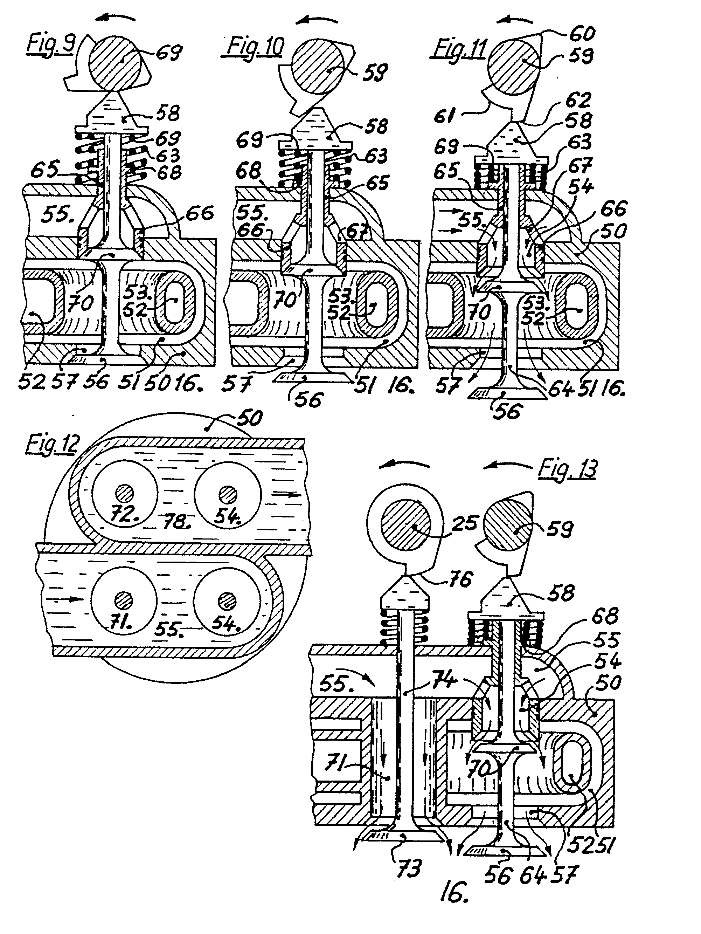

Les figures 9 à 11 illustrent en coupe partielle une seconde forme d'exécution du moteur décrit précédemment dans lequel la disposition des chambres de préchauffage et de combustion dans la culasse est différente et dans lequel les dispositifs d'obturation associés aux soupapes sont également de construction différente.

Dans cette forme d'exécution la culasse 50 comporte une chambre de préchauffage 51 occupant pratiquement toute la surface située au dessus de la chambre à volume variable 16. Cette chambre de préchauffage renferme une chambre de combustion 52 logée dans cette chambre de préchauffage et comportant des passages 53 donnant passage aux soupapes et qui sont donc alignés sur l'orifice 57 reliant la chambre de préchauffage 51 respectivement la chambre de combustion 52 à la chambre à volume variable et sur l'orifice 54 reliant cette chambre de préchauffage respectivement la chambre de combustion 52 à la tubulure d'admission 55 respectivement à la tubulure d'échappement.

Par cette disposition des chambres de préchauffage 51 et de combustion 52 on obtient un échange de chaleur optimum entre les fluides contenus dans ces chambres.

Le moteur comporte encore une soupape d'admission 56 coopérant avec un siège de l'orifice 57 dont la tige 64 traverse le passage 53, l'orifice 54 et la tubulure d'admission 55 et comporte à son extrêmité libre un poussoir 58 coopérant avec une came 59 à trois levées 60, 61 et 62. Deux levées 60, 61 présentent la même amplitude tandis que la levée 62 présente une amplitude plus grande que les autres comme dans le cas décrit précédemment.

Cette soupape tend à être maintenue en position fermée par un ressort 63.

La tige 64 de la soupape 56 sert de guide à une pièce mobile d'un dispositif d'obturation qui comporte une partie tubulaire 65 coulissant sur la tige de soupape 64 et s'étend au travers de la paroi de la tubulure d'admission 55 ainsi qu'une partie constituant un cylindre 66 coulissant dans l'orifice 54 de la culasse 50, l'étanchéité étant assurée par des segments. La partie supérieure de cette partie cylindrique comporte des ouvertures 67 donnant accès à la tubulure d'admission 55 et la partie inférieure de cette partie cylindrique est ouverte et débouche dans la chambre de préchauffage, respectivement dans la chambre de combustion.

La partie tubulaire 65 de cette pièce mobile du dispositif d'obturation comporte une butée 68 limitant ses déplaçements vers le bas. Un ressort 69 prenant appui entre le poussoir 58 et cette butée 68 tend à déplacer la pièce mobile 65, 66 du dispositif d'obturation vers le bas.

La tige de soupape 64 comporte encore une seconde soupape 70 coopérant avec un siège pratiqué à l'extrémité ouverte du cylindre 66.

La soupape d'échappement, non illustrée, est munie de façon similaire d'une seconde soupape coopérant avec un dispositif d'obturation identique coulissant dans un orifice reliant la chambre de combustion 52 à la tubulure d'échappement (non illustrée).

A la figure 9 on voit que le poussoir 58 est en contact avec l'arbre à came, la soupape 56 obture l'ouvertrue 57 et la soupape 70 est appliquée contre la partie cylindrique 66 obturant toute communication entre la chambre de préchauffage 51 et la tubulure d'admission 55.

Lorsque le poussoir 58 est actionné par une des levées 60 et 61 de faible amplitude la soupape 56 est déplacée et ouvre l'orifice 57 mettant en communication la chambre de préchauffage 51 avec la chambre à volume variable 16. Ceci correspond au temps de l'expansion de l'air préchauffé.

Dans cette position le ressort 69 déplace la pièce mobile 65,66 conjointement à la tige de soupape 64 et cette pièce du dispositif d'obturation est en butée contre la soupape 70 interdisant ainsi toute communication entre la chambre de préchauffage 51 et la tubulure d'admission 55.

Lorsque le poussoir 58 est actionné par la came 62 de grande amplitude la soupape 56 est toujours ouverte, la butée 68 limite le déplacement axial de la pièce 65,66 du dispositif d'obturation de sorte que la soupape 70 quitte son siège et ouvre un passage reliant la chambre de préchauffage 51 à la tubulure d'admission 55 (figure 11). Dans cette position la chambre à volume variable 16 est reliée, au-travers de la chambre de préchauffage, à la tubulure d'admission.

Le fonctionnement de la soupape d'échappement et de son dispositif d'obturation est en tout point analogue.

Cette réalisation présente certains avantages qui sont la réalisation d'une communication relativement directe et sans chicanes entre la tubulure d'admission et la chambre à volume variable et l'absence de lumières donne une meilleure fiabilité des segments d'étanchéité entre la culasse 50 et la partie cylindrique 66, ces segments étant toujours en appuis. De plus la course totale des soupapes est plus faible que dans le système décrit précédemment.

Une particularité de cette réalisation est que la tige de soupape 64 présente deux soupapes 56 et 70.

Pour augmenter les performances et le nombre de tours il faut pouvoir réaliser une admission d'air et un échappement de gaz important en un très court laps de temps. La forme d'exécution illustrée aux figures 12 et l3 comporte à cet effet, en plus des organes décrits en référence aux figures 9 à 11, des accès directs entre la chambre à volume variable 16 et les tubulures d'admission 55 et d'échappement 78.

Chacune de ces liaisons comporte un canal 71, 72 reliant directement la chambre à volume variable 16 à la tubulure d'admission 55 respectivement d'échappement 78 traversant de façon étanche les chambres de préchauffage 51 et de combustion 52.

Ces canaux 71,72 comportent du côté de la chambre à volume variable 16 un siège de soupape coopérant avec une soupape 73 solidaire d'une tige 74 et actionnée par un second arbre à came 75 par l'intermédiaire de came 76 à une levée. Dans une telle exécution pendant les temps d'échappement et d'admission la chambre à volume variable 16 est reliée aux tubulures d'échappement respectivement d'admission par les canaux 72,71 respectivement et simultanément de la façon décrite dans la seconde forme d'exécution. Ainsi la section de passage totale est augmentée provoquant une aspiration au refoulement des gaz plus rapide et avec moins de pertes de charges.

Parmis les avantages qu'offrent les moteurs à six temps de cette conception l'un des plus important est qu'ils sont "multicarburants" c'est à dire qu'ils peuvent utiliser toute sorte de carburants, plusieurs même alternativement et indifféremment sans aucun réglage. Parmi ces carburants utilisables dans de tels moteurs on peut citer par exemple l'essence super ou sans plomb, le diesel, les diverses huiles lourdes, l'alcool, le kérosène, le gaz de ville ou le gaz naturel et même des carburants en poudre.

Cette particularité très intéressantes de ces moteurs découle du fait que l'explosion et/ou la combustion du carburant s'effectue dans la chambre de combustion qui est fermée et de volume fixe. De ce fait ni le moment d'allumage ni la durée de la combustion n'ont d'importance pour le fonctionnement du moteur. On peut donc utiliser du carburant à faible taux d'octane tout en ayant des taux de compression élevés. Dans de tels moteurs le phénomène d'auto-allumage n'entraîne aucune conséquence néfaste. On peut aussi utiliser du diesel comme carburant avec un taux de compression moins élevé que dans un moteur diesel conventionnel.

On peut également utiliser des carburants à combustion lente puisque la durée de combustion totale s'étend sur un laps de temps important, au moins pendant un tiers du cycle complet. En outre la chambre de combustion reste pendant tout le cycle à une température élevée et ses parois restent en permanence à l'état incandescent ; ceci facilite grandement la combustion totale des carburants.

Cette particularité du moteur à six temps doit être particulièrement relevée car elle est de la plus haute importance économique, elle permet d'obtenir un meilleur rendement que les moteurs à quatre temps tout en utilisant des carburants de moindre qualité ou inutilisables dans les moteurs à combustion interne conventionnels.

Il faut enfin également relever que dans le moteur décrit dans le présent brevet les problèmes d'étanchéité relevés au début de cet exposé sont totalement résolus du fait que des étanchéité ne doivent être prévues qu'entre des pièces se déplaçant linéairement l'une par rapport à l'autre et qui sont constamment en contact. La réalisation de telles étanchéité est bien résolue par des techniques éprouvées dans tous les moteurs existants.

## Revendications

1. Moteur à combustion interne comprenant un bloc moteur, dans lequel est tourilloné un vilebrequin, présentant au moins un cylindre dans lequel se déplace linéairement un piston relié au vilebrequin par une bielle; une culasse fixée sur la partie supérieure du bloc moteur; cette culasse, ce piston et ce cylindre définissant une chambre à volume variable reliée d'une part à au moins une tubulure d'admission et d'autre part à au moins une tubulure d'échappement; ce moteur comprenant encore, pour chaque chambre à volume variable, au moins une soupape d'admission et au moins une soupape d'échappement actionnées par au moins un arbre à came entraîné par le vilebrequin; cette culasse comprenant une chambre de préchauffage située entre la tubulure d'admission et la chambre à volume variable, ainsi qu'une chambre de combustion située entre la tubulure d'échappement et la chambre à volume variable; caractérisé par le fait que les chambres de combustion et de préchauffage sont situées au moins partiellement immédiatement au-dessus de la chambre à volume variable et par le fait que les soupapes d'admission et d'échappement mettent en communication ou séparent, suivant leur position, la chambre à volume variable avec la chambre de préchauffage, respectivement la chambre de combustion; que les tiges des soupapes d'admission et d'échappement portent l'organe mobile d'un dispositif d'obturation ouvrant ou fermant la liaison entre la chambre de préchauffage et la tubulure d'admission, respectivement entre la chambre de combustion et la tubulure d'échappement; et que les liaisons mécaniques actionnant les soupapes d'admission et d'échappement à partir de l'arbre à came sont telles qu'une soupape puisse être en position d'ouverture tandis que le dispositif d'obturation qui lui est associé est en position de fermeture, de sorte que la chambre à volume variable est en liaison avec la chambre de préchauffage respectivement de combustion, et que cette soupape puisse également être en position d'ouverture simultanément au dispositif d'obturation qui lui est associé, de sorte que la chambre à volume variable est reliée à la tubulure d'admission par l'intermédiaire de la chambre de préchauffage respectivement à la tubulure d'échappement par l'intermédiaire de la chambre de combustion.

2. Moteur selon la revendication 1, caractérisé par le fait qu'au cours du cycle de fonctionnement le fluide circule tantôt dans un sens, tantôt dans l'autre autour de la soupape d'admission et de la soupape d'échappement.

3. Moteur selon la revendication 1 caractérisé par le fait que les dispositifs d'obturation mettent respectivement en communication les chambres de préchauffage et de combustion avec les tubulures d'admission et d'échappement lorsque l'organe mobile coulissant ouvre au moins une lumière de la partie fixe du dispositif d'obturation correspondant.

4. Moteur selon la revendication 3, caractérisé par le fait que l'organe mobile de chaque dispositif d'obturation est solidaire de la tige de la soupape correspondante et présente un diamètre sensiblement égal à celui de cette soupape de sorte que les forces sur ces éléments mobiles dues aux pressions internes des chambres de combustion respectivement de préchauffage sont sensiblement équilibrées.

5. Moteur selon l'une des revendications 1 à 4, caractérisé par le fait que chaque came comporte trois levées, deux de faible hauteur et une de plus grande hauteur et par le fait qu'une des levées de faible hauteur est indépendante tandis que la seconde levée de faible hauteur est directement accolée angulairement à la levée de forte hauteur.

6. Moteur selon la revendication 1 caractérisé par le fait qu'il comporte en outre une soupape d'admission actionnée par un arbre à came obturant respectivement ouvrant un passage reliant directement la chambre à volume variable à la tubulure d'admission ainsi qu'une soupape d'échappement actionnée par un arbre à came obturant respectivement ouvrant un passage reliant directement la chambre à volume variable à la tubulure d'échappement.

7. Moteur selon la revendication 1 caractérisé par le fait que les dispositifs d'obturation comportent un piston solidaire de la soupape correspondante coopérant avec des lumières pratiquées dans la culasse.

8. Moteur selon la revendication 1 caractérisé par le fait que les dispositifs d'obturation comportent une soupape solidaire de la tige de soupape correspondante coopérant avec la partie inférieure ouverte d'une partie cylindrique coulissante sur cette tige de soupape et de façon étanche dans un orifice de la culasse; la partie supérieure de cette partie cylindrique présentant des ouvertures reliant l'espace interne de cette pièce à la tubulure d'admission respectivement d'échappement; et par le fait que des moyens sont prévus pour limiter la course axiale de cette partie cylindrique à une valeur inférieure à celle de la tige de soupape correspondante.

## Claims

1. Internal combustion engine comprising a motor block in which a crank shaft is journaled, presenting at least one cylinder in which a piston displaces linearly which is connected to the crank shaft through a cam arm; a valve head fixed on the upper part of the motor block; this valve head, this piston and this cylinder defining a variable volume chamber connected on the one hand to at least one admission duct and on the other hand to at least one exhaust duct; this engine comprising further for each variable volume chamber at least one inlet valve and at least one exhaust valve actuated by at least one cam shaft given by the crank shaft; this valve head comprising a preheating chamber located between the admission duct and the variable volume chamber, as well as a combustion chamber located between the exhaust duct and the variable volume chamber; characterised by the fact that the combustion and preheating chambers are located at least partially immediately above the variable volume chamber and by the fact that the inlet and exhaust valve put in communication or separate, according to their position, the variable volume chamber with a preheating chamber respectively the combustion chamber; that the rods of the admission and exhaust valves carries a movable member of an obturation device opening or closing the linkage between the preheating chamber and the admission duct respectively the combustion chamber and the exhaust duct; and that the mechanical linkages actuating the admission and exhaust valve through the cam shaft are such that a valve can be in an opened position whereas the opturating device which is associated to it is in closed position, so that the variable volume chamber is connected to the preheating chamber respectively the combustion chamber and that this valve can also be in opened position simultaneously to the opturation device which is associated to it, so that the variable volume chamber is connected to the admission duct through the intermediary of the preheating chamber respectively the exhaust duct through the intermediary of the combustion chamber.

2. Engine according to claim 1 characterised by the fact that during the working cycle the fluid circulates sometimes in one direction and sometimes in the other direction around the inlet valve and the outlet valve.

3. Engine according to claim 1 characterised by the fact that the opturating devices put respectively in communication the preheating chamber and combustion chamber with the admission and exhaust ducts when the movable sliding member opens at least one slot of the fixed part of the opturating device to which it corresponds.

4. Engine according to claim 3 characterised by the fact that the movable member of each opturation device is fast with the rod of the corresponding valve and present a diameter which is sensibly equal to the one of this valve so that the forces onto these movable elements due to internal presure within the combustion chamber respectively preheating chamber are approximatively equilibrated.

5. Engine according to one of claims 1 to 4 characterised by the fact that each cam comprises three lifts, two of small height and one of a great height and by the fact that one of the lifts of low height is independent whereas the second lift of low height is situated angularly immediately beneath the high height lift.

6. Engine according to claim 1 characterised by the fact that it comprises further an inlet valve actuated by a cam shaft opturating respectively opening a passage connecting directly the variable volume chamber to the admission duct as well as an outlet valve actuated by a cam shaft opturating respectively opening a passage connecting directly the variable volume chamber to the exhaust duct.

7. Engine according to claim 1 characterised by the fact that the opturating devices comprise a piston fast to the corresponding valve and cooperating with slots provided in the valve head.

8. Engine according to claim 1 characterised by the fact that the obturation devices comprise a valve fast with the rod of the corresponding valve cooperating with the lower portion which is opened of a cylindrical portion sliding on said valve rod and in a tight manner within a bore of the valve head; the uper portion of the cylindrical part presenting a passage connecting the internal space of this part to the admission duct respectively the exhaust duct; by the fact that means are provided to limit the axial stroke of the cylindrical portion to a value which is less than the one of the corresponding valve rod.

**Patentansprüche**

1. Brennkraftmaschine mit einem Motorblock, in dem eine Kurbelwelle gelagert ist, mit wenigstens einem Zylinder, in dem sich ein Kolben linear bewegt, der mit der Kurbelwelle durch ein Pleuel verbunden ist; einem Zylinderkopf, der am oberen Bereich des Motorblocks befestigt ist; wobei dieser Zylinderkopf, der Kolben und der Zylinder eine Kammer mit veränderbarem Volumen definieren, die einerseits mit wenigstens einem Ansaugrohrstutzen und andererseits mit wenigstens einem Abgasrohrstutzen verbunden ist; wobei der Motor weiterhin für jede Kammer mit veränderlichem Volumen, wenigstens ein Einlaßventil und wenigstens ein Auslaßventil aufweist, die durch wenigstens eine Nockenwelle betätigt werden, die durch die Kurbelwelle angetrieben wird, wobei der Zylinderkopf eine Vorheizkammer aufweist, die zwischen dem Ansaugrohrstutzen und der Kammer mit veränderlichem Volumen angeordnet ist, sowie eine Brennkammer aufweist, die zwischen dem Abgasrohrstutzen und der Kammer mit veränderlichem Volumen angeordnet ist; **dadurch gekennzeichnet, daß** die Verbrennungs- und Vorheizkammern wenigstens teilweise unmittelbar oberhalb der Kammer mit veränderlichem Volumen angeordnet sind, und daß die Einlaßventile und Auslaßventile entsprechend ihrer Position die Kammer mit veränderlichem Volumen mit der Vorheizkammer bzw. der Verbrennungskammer in Verbindung setzen oder diese trennen; daß die Stangen der Einlaß- und Auslaßventile das bewegliche Organ einer Verschließvorrichtung tragen, die die Verbindung zwischen der Vorheizkammer und dem Ansaugrohrstutzen bzw. zwischen der Verbrennungskammer und dem Abgasrohrstutzen öffnet oder schließt; und daß die mechanischen Verbindungen, die die Einlaß- und Auslaßventile ausgehend von der Nockenwelle betätigen, derart sind, daß ein Ventil in Öffnungsstellung sein kann, während die ihm zugeordnete Verschließvorrichtung in Schließstellung ist, derart, daß die Kammer mit veränderlichem Volumen in Verbindung ist mit der Vorheizkammer bzw. der Brennkammer, und daß dieses Ventil ebenfalls in öffnungsstellung gleichzeitig zur ihr zugeordneten Schließvorrichtung derart sein kann, daß die Kammer mit veränderlichem Volumen mit dem Ansaugrohrstutzen mittels der Vorheizkammer bzw. mit dem abgasrohrstutzen über die Verbrennungskammer verbunden sein kann.

2. Brennkraftmaschine nach Anspruch 1, **dadurch gekennzeichnet, daß** während des Betriebszyklus das Fluid gleichermaßen in die eine Richtung als auch in die andere Richtung um das Einlaßventil und das Auslaßventil zirkuliert.

3. Brennkraftmaschine nach Anspruch 1, **dadurch gekennzeichnet, daß** die Schließvorrichtungen die Vorheizkammern bzw. die Brennkammern mit den Ansaugrohrstutzen bzw. den Angasrohrstutzen in Verbindung setzen, wenn das gleitende bewegbare Organ wenigstens eine Öffnung des festen Bereichs der entsprechenden Schließvorrichtung öffnet.

4. Brennkraftmaschine nach Anspruch 3, **dadurch gekennzeichnet, daß** das bewegbare Organ einer jeden Schließvorrichtung mit der Stange des entsprechenden Ventils verbunden ist und einen Durchmesser aufweist, der im wesentlichen Gleich jenem des Ventils ist, derart, daß die auf die, aufgrund der inneren Drücke der Brennkammern bzw. Vorheizkammern bewegbaren Elemente wirkenden Kräfte im wesentlichen ausgewogen sind.

5. Brennkraftmaschine nach einem der Ansprüche 1 bis 4, **dadurch gekennzeichnet, daß** jeder Hocken drei Erhebungen aufweist, zwei von schwacher Höhe und eine von großer Höhe, und daß eine der Erhebungen von schwacher Höhe unabhängig ist, während die zweite Erhebung von schwacher Höhe direkt winkelmäßig mit der Erhebung von großer Höhe verbunden ist.

6. Brennkraftmaschine nach Anspruch 1, **dadurch gekennzeichnet, daß** sie weiterhin ein Einlaßventil aufweist, das von einer Nockenwelle betätigt wird, das einen Kanal schließt bzw. öffnet, der direkt die Kammer mit veränderlichem Volumen mit dem Ansaugrohrstutzen verbindet, sowie ein Auslaßventil aufweist, das durch eine Nockenwelle betätigt wird, das einen Kanal verschließt bzw. öffnet, der die Kammer mit veränderlichem Volumen mit dem Angasrohrstutzen direkt verbindet.

7. Brennkraftmaschine nach Anspruch 1, **dadurch gekennzeichnet, daß** die Schließvorrichtungen einen Kolben aufweisen, der mit dem entsprechenden Ventil verbunden ist, das mit den in dem Zylinderkopf ausgebildeten Öffnungen zusammenwirkt.

8. Brennkraftmaschine nach Anspruch 1, **dadurch gekennzeichnet, daß** die Schließvorrichtungen ein Ventil aufweisen, das mit der Stange des entsprechenden Ventils verbunden ist, das mit dem unteren offenen Bereich eines auf dieser Ventilstange und auf abdichtende Weise in einer Öffnung des Zylinderkopfes gleitbeweglichen zylindrischen Bereichs zusammenwirkt; wobei der obere Bereich dieses zylindrischen Bereichs Öffnungen aufweist, die den Innenraum dieses Teils mit dem Ansaugrohrstutzen bzw. dem Angasrohrstutzen verbindet; und daß Einrichtungen vorgesehen sind, um den axialen weg dieses zylindrischen Bereichs auf einen Wert zu begrenzen, der geringer ist als jener der entsprechenden Ventilstange.

Fig. 1

Fig. 2

Fig.3  Fig.5  Fig.7

Fig. 4  Fig.6  Fig.8

Fig. 9

Fig. 10

Fig. 11

Fig. 12

Fig. 13